# EUROPÄISCHE PATENTANMELDUNG

(11) **EP 1 393 895 A1**
(43) Veröffentlichungstag der Anmeldung: **03.03.2004**
(21) Anmeldenummer: 03013675.8
(22) Anmeldetag: 17.06.2003
(51) Int. Cl.: B32B 27/04, B32B 27/26, E04F 15/12

(54) **Verfahren und Mittel zur Herstellung und optischen Gestaltung einer Oberfläche auf einem tragenden Untergrund eines Gegenstandes z.B. Boden, Wand oder Möbelstück**

(30) Priorität: 02.09.2002 DE 10240373
(71) Anmelder: Silikal GmbH & Co. KG, 63533 Mainhausen (DE)
(72) Erfinder: Schmidt, Harald, 56237 Nauort (DE)
(74) Vertreter: Schieferdecker, Lutz, Dipl.-Ing.

(57) **Zusammenfassung**

Die Erfindung betrifft ein Verfahren und ein Mittel zur Herstellung von optischen Gestaltungen einer Oberfläche auf einem tragenden Untergrund eines beliebigen Körpers oder Gegenstandes wie insbesondere eines Gebrauchs- oder Bedarfsgegenstandes, eines Bodens, einer Wand, eines Möbels oder dergleichen, wobei als optische Gestaltung ein Dekor, eine beliebige Darstellung und/oder eine informative und/oder eine sonstige Angabe einschließlich einer Werbeaussage vorgesehen sind.

Der Kern der Erfindung besteht darin, daß die optische Gestaltung 5 auf einem Trägerwerkstoff 4 angeordnet wird, der in mindestens eine auf dem tragenden Untergrund 2 angeordnete Lage 3 eines kalt verarbeitbaren, flüssigen sowie aushärtenden Kunststoffes homogen integriert und eingebettet wird.

## Beschreibung

Die Erfindung betrifft ein Verfahren und Mittel zur Herstellung und optischen Gestaltung einer Oberfläche auf einem tragenden Untergrund eines Gegenstandes, insbesondere eines Gebrauchs- oder Bedarfsgegenstandes, eines Bodens, einer Wand, eines Möbels oder dergleichen, wobei als optische Gestaltung ein beliebiges Dekor, eine beliebige Darstellung einschließlich einer informativen Aussage und/oder einer Werbeaussage vorgesehen sein können.

Grundsätzlich ähnliche Mittel und ein grundsätzlich ähnliches Herstellungsverfahren sind seit Jahren auf dem Gebiet der Möbelindustrie bei der Herstellung sogenannter Resopal-Platten bekannt. Dort werden dekorativ bedruckte Trägerwerkstoffe wie textile Fließstoffe, Folien oder Papiere auf Oberflächen wie Spanplatten aufgebracht und mit einem flüssigen, aus Kunststoff bestehenden Werkstoff abgedeckt. Dieser Werkstoff erhärtet nach Energiezufuhr in Form von Hitze und Druck und bildet mit dem tragenden Untergrund sowie der dekorativen Einlage eine homogene Einheit.

Nachteilig ist bei diesem bekannten Herstellungsverfahren und bei der Verwendung der hierzu benötigten Kunststoffe, daß der apparative Aufwand und somit die Investitionskosten zur Durchführung dieses bekannten Verfahrens sehr hoch sind.

Der Erfindung liegt daher die Aufgabe zugrunde, Maßnahmen vorzusehen, die sich mit einem geringeren Energieaufwand durchführen lassen und einen deutlich geringeren, apparativen beziehungsweise maschinellen Aufwand benötigen.

Zur Lösung dieser Aufgabe sieht die Erfindung mit den Merkmalen des kennzeichnenden Teiles von Patentanspruch 1 vor, daß die optische Gestaltung auf einem Trägerwerkstoff angeordnet ist, der in mindestens eine Lage eines kalt verarbeitbaren, flüssigen Kunststoffes homogen eingebettet und integriert ist, wobei der kalt verarbeitbare Kunststoff auf dem tragenden Untergrund angeordnet ist.

Der kalt verarbeitbare Kunststoff ist ein kalthärtendes Reaktionsharz, wie zum Beispiel ein Epoxidharz (EP), ein Methacrylatharz (MMA), ein ungesättigtes Polyestherharz (UP), ein Vinylesterharz (VE) oder ein Polyurethanharz (PUR). Die Härtung der besagten Reaktionsharze erfolgt in grundsätzlich bekannter Weise und vorzugsweise durch eine kalt ablaufende Redox-Polymerisation durch Zugabe eines Initiators wie zum Beispiel von Peroxid (Härterpulver).

In Weiterbildung der Erfindung ist vorgesehen, daß eine Deckschicht aus einem durchsichtigen, kalt verarbeitbaren Kunststoff den Trägerwerkstoff mit der optischen Gestaltung bedeckt. Diese Deckschicht besteht zweckmäßigerweise aus einem ähnlichen beziehungsweise dem gleichen, kalt verarbeitbaren Kunststoff wie die unmittelbar auf dem tragenden Untergrund befindliche Lage. Dadurch ist sichergestellt, daß die optische Gestaltung auf dem Trägerwerkstoff unabhängig von der optischen Gestaltung der ersten Lage jederzeit gut sichtbar ist.

Mit den besagten Merkmalen lassen sich beliebige optische Gestaltungen auf kostengünstige Weise sowie mit guten Festigkeitseigenschaften und Haltbarkeit auf allen nur denkbaren, tragenden Untergründen beliebiger Körper einschließlich auf Boden und sonstigen Flächen herstellen.

Weitere Merkmale der Erfindung gehen aus Unteransprüchen und der Beschreibung im Zusammenhang mit der Zeichnung hervor.

Die Erfindung wird nachstehend anhand von Ausführungsbeispielen, die in der Zeichnung dargestellt sind, näher beschrieben. Dabei zeigen:
- Fig. 1:: schematisch eine Ansicht einer Fläche eines Gebrauchsgegenstandes und/oder eines Fußbodens in kleinerem Maßstab;
- Fig.2:: einen Schnitt längs der Linie II-II in Fig. 1 zur Darstellung verschiedener Lagen/Schichten ohne Beachtung eines Maßstabes;
- Fig. 3:: eine Ansicht ähnlich wie in Fig. 1 von einem abgewandelten Ausführungsbeispiel;
- Fig. 4:: einen Schnitt längs der Linie IV-II in Fig. 3 ohne Beachtung irgendeines Maßstabes und nur zur Verdeutlichung verschiedener Schichten und
- Fig. 5:: eine Prinzipskizze eines weiteren Schichtaufbaues für einen Gebrauchs- und/oder Bedarfgegenstand mit einer tragenden Unterlage beziehungsweise für einen Fußboden.

Gemäß der schematischen Schnittansicht von Fig. 2 weist ein Bedarfsund/oder Gebrauchsgegenstand 1 wie zum Beispiel eine Tischplatte oder ein Fußboden 1 einen tragenden Untergrund 2 auf. Auf diesem Untergrund 2 befindet sich eine erste Lage 3 in Form eines flüssig aufgebrachten, kalt verarbeitbaren Kunststoffes. Bei diesem Kunststoff handelt es sich um ein Kunststoffharz. Eingebettet in die erste Lage 3 ist ein Trägerwerkstoff 4, auf dem eine optische Gestaltung 5 in Form eines Dekors, einer beliebigen Darstellung, einer informativen und/oder sonstigen Angabe einschließlich einer Werbeaussage vorgesehen sind. Bei dem Trägerwerkstoff 4 handelt es sich um ein Gewebe, ein Gewirke, ein Netz oder um eine Folie oder dergleichen. Wichtig ist, daß der Trägerwerkstoff 4 für das die erste Lage bildende Kunststoffharz saugfähig ist. Dadurch wird erreicht, daß sich der Trägerwerkstoff 4 zusammen mit der optischen Gestaltung 5 bei der Herstellung homogen mit der ersten Lage 3 verbindet. Die erste Lage 3 und auch in gleicher Weise eine den Trägerwerkstoff 4 abdeckende Deckschicht 6 aus einem grundsätzlich gleichartigen, ebenfalls flüssig verarbeitbarem und anschließend aushärtenden Kunststoffharz bilden eine homogene Einheit mit dem Trägerwerkstoff 4. Er ist in das Kunststoffharz der beiden Lagen beziehungsweise Schichten gleichsam "monolithisch" eingebettet beziehungsweise integriert.

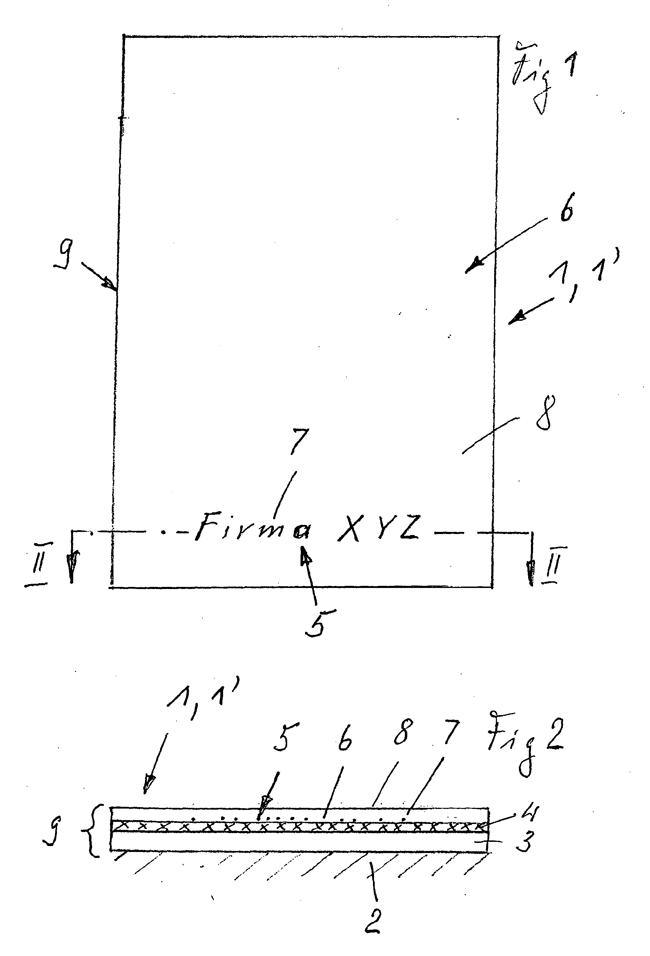

Der Trägerwerkstoff 4 dient als Träger für ein beliebiges Dekor beziehungsweise für eine beliebige Darstellung und/oder für eine informative oder sonstige Aussage einschließlich einer möglichen Werbeaussage. Gemäß den Ansichten in den Fig. 1 und 2 handelt es sich bei der optischen Gestaltung 5 um die Darstellung von Buchstaben 7 für eine Werbeaussage "Firma XYZ". Die Buchstaben 7 befinden sich unter der Deckschicht 6, die zwingend aus einem durchsichtigen, flüssig verarbeitbaren sowie aushärtenden Kunststoffharz ebenso besteht wie die erste Lage 3 aus einem aushärtbaren Kunststoff besteht. Die Deckschicht 6 bildet eine durchsichtige Oberfläche 8 eines aus der ersten Lage 3, dem Trägerwerkstoff 4 mit der optischen Gestaltung 5 und der Deckschicht 6 bestehenden Überzuges 9 auf dem tragenden Untergrund 2 eines beliebigen Körpers.

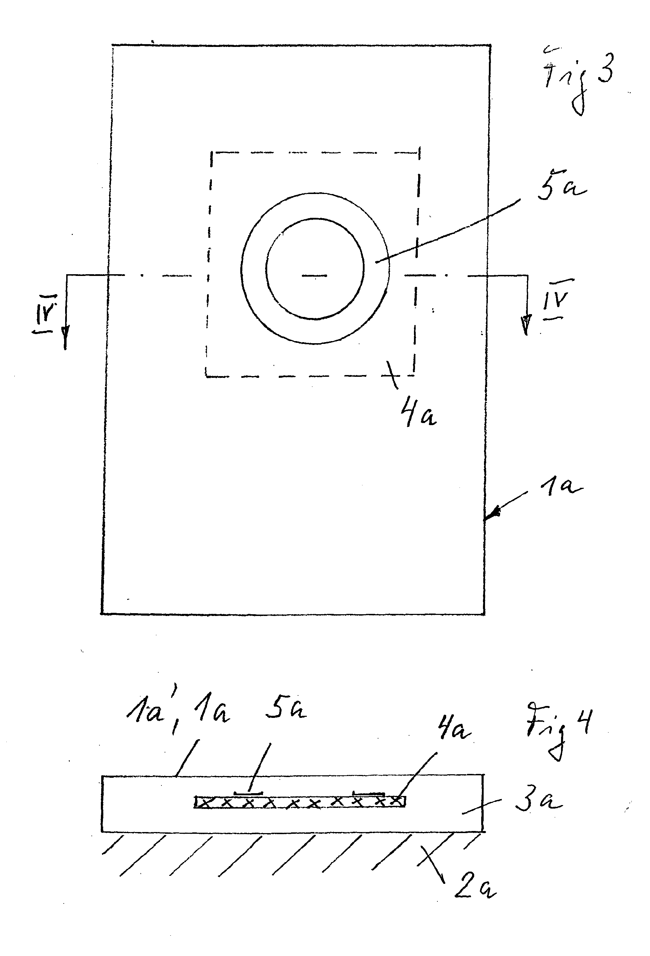

Die Fig. 3 und 4 zeigen eine abgewandelte Ausführungsform, wobei grundsätzlich gleiche Teile dieselben Bezugszahlen und zusätzlich den unterscheidenden Buchstabenindex a aufweisen.

Gemäß Fig. 4 ist ein ebenfalls flächiger Trägerwerkstoff 4a in eine Lage 3a eines Körpers beziehungsweise Bedarf- und/oder Gebrauchsgegenstandes 1a oder Bodens 1a' mit festem Untergrund 2a eingebettet. Der Trägerwerkstoff 4a nimmt nur einen Teil der Grundfläche des Bedarfsund/oder Gebrauchsgegenstandes 1a beziehungsweise des Bodens 1a' ein. Seine Fläche ist nicht wesentlich größer als die unmittelbar als Design dienende Darstellung 5a.

Die aus einem zunächst flüssig verarbeitbaren und dann aushärtenden Kunststoff bestehende Lage 3a ist ein homogener Körper und wird lediglich zum Einbringen des Trägerwerkstoffes 4a mit der optischen Gestaltung 5a in mehreren Schritten hergestellt.

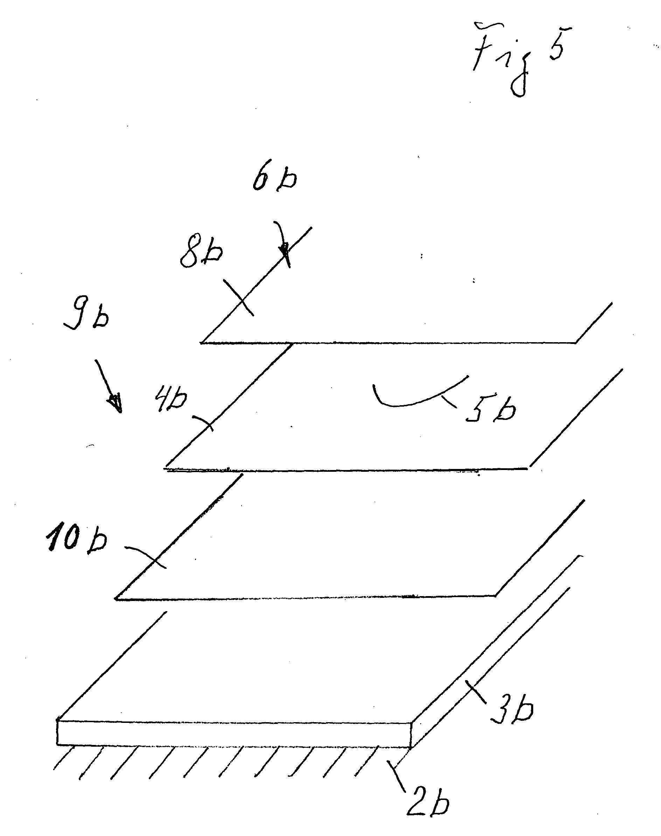

Bei dem in Fig. 5 schematisch dargestellten, weiteren Ausführungsbeispiel handelt es sich ebenfalls um die Gestaltung und den Aufbau eines Überzuges 9b für einen beliebigen Körper beziehungsweise Gegenstand oder Boden und dergleichen, wobei wiederum grundsätzlich gleiche Teile dieselben Bezugszahlen und zusätzlich den unterscheidenden Buchstabenindex b aufweisen.

Auf einem tragenden Untergrund 2b befindet sich eine erste Lage 3b, die aus Kunststoffharz besteht und im Rohzustand flüssig beziehungsweise gießfähig ist. Auf der ersten Lage 3b ist eine Abdeckschicht 10b beziehungsweise eine Versiegelung 10b angeordnet. Sie besteht aus einem gleichartigen Kunststoffharz wie die erste Lage 3b. Die Versiegelung 10b kann eingefärbt sein oder sie ist durchsichtig. Auf der Abdeckschicht/Versiegelung 10b befindet sich der Trägerwerkstoff 4b für das gewünschte Design beziehungsweise für die gewünschte optische Gestaltung 5b.

Der Trägerwerkstoff 4b kann ein Gewebe oder jeder andere, grundsätzlich brauchbare, flächige Werkstoff wie zum Beispiel auch eine Intarsienfolie sein.

Als Deckschicht 6b ist eine zweite Versiegelung aus dem gleichen Werkstoff wie die erste Lage 3b und die Abdeckschicht 10b vorgesehen. Diese Deckschicht beziehungsweise Versiegelung 6b besteht zwingend aus einem Harz beziehungsweise Kunststoffharz mit einer durchsichtigen Einstellung. Andernfalls wäre durch die die Oberfläche 8b des Überzuges 9b bildende Deckschicht 6b die unmittelbar darunter auf dem Trägerwerkstoff 4b befindliche optische Gestaltung 5b nicht sichtbar.

Das für die verschiedenen Schichten verwendbare Harz beziehungsweise Kunststoffharz ist vorzugsweise ein kalthärtendes. Reaktionsharz.

Kunstharze und auch insbesondere Reaktionsharze mit guten Festigkeitseigenschaften sind bekannt. Sie weisen entsprechend ihrer Zusammensetzung zum Teil sehr gute mechanische Eigenschaften sowie eine hohe Widerstandsfähigkeite gegen Chemikalien und Witterungseinflüsse auf.

Die Reaktionsharze bestehen im Allgemeinen aus zwei Komponenten und werden in flüssigem Zustand gemischt sowie verarbeitet und erhärten durch chemische Reaktion in relativ kurzer Zeit. Hierzu gehören insbesondere Epoxidharze (EP), Methacrylatharze (MMA), ungesättigte Polyesterharze (UP) sowie Polyurethanharze (PUR). Sie werden als transparente, pigmentierte oder mit Füllstoffen gemischte Produkte eingesetzt.

Bevorzugte kalthärtende Reaktionsharze sind auf Estern der Acryl-und Methacrylsäure aufgebaut. Sie weisen als reaktionsfähige Gruppe eine C-C-Doppelbindung auf. Ihren Hauptbestandteil bildet das Methylmethacrylat (MMA) oder andere Monomere, die ausreichende Festigkeiten für den vorgesehenen Verwendungszweck im gehärteten Zustand besitzen.

Die Härtung der besagten Reaktionsharze erfolgt zweckmäßigerweise durch eine kalt ablaufende Redox-Polymerisation durch Zugabe eines Initiators, zum Beispiel von Peroxid. Als weitere Komponente dient ein Beschleuniger, zum Beispiel ein Anilin-Derivat, Para-Toluidin oder ein organisches Metallsalz, gemäß grundsätzlich bekannter Technologie. Darüber hinaus sind auch andere Reaktionsharze bekannt, die aus einer flüssigen Harz- und aus einer flüssigen Härterkomponente bestehen.

Ihre Mischungsmengen müssen jeweils genau aufeinader abgestimmt sein, da beide Komponenten miteinander zum fertigen Endprodukt reagieren. In dem zuerst beschriebenen Fall hat das Härterpulver nur die Aufgabe, den Härtungsvorgang (Polymerisation) einzuleiten beziehungsweise auszulösen, ohne dabei selbst einen wesentlichen Einfluß auf die Eigenschaften des Endproduktes zu nehmen.

Die Erfindung ist nicht auf bestimmte Reaktionsharze und auch nicht auf Reaktionsharze schlechthin beschränkt. Vielmehr sind auch noch andere kalthärtende Kunststoffe zur Verwendung als Überzug beziehungsweise zur Bildung der Schichten und Lagen der hier interessierenden Art geeignet, sofern sie die oben genannten Rahmenbedingungen erfüllen.

Auch ist die Erfindung nicht auf bestimmte Anwendungsfälle beschränkt und kann überall dort und dann verwirklicht werden, wenn es darum geht, ein Mittel bereitzustellen, um einen Körper etc. mit einem Design und Dekor oder dergleichen zu versehen, wo es bisher nur möglich war, die Oberfläche zum Beispiel mit einer graphischen oder farblichen Gestaltung zu versehen oder mittels einer Verklebung mehrere Lagen zu kombinieren.

## Patentansprüche

1. Mittel zur Herstellung und optischen Gestaltung einer Oberfläche auf einem tragenden Untergrund eines Gegenstandes, insbesondere eines Gebrauchs- oder Bedarfsgegenstandes, eines Bodens, einer Wand, eines Möbels oder dergleichen, wobei als optische Gestaltung (5) ein Dekor, eine beliebige Darstellung und/oder eine informative und/oder eine sonstige Angabe einschließlich einer Werbeaussage vorgesehen sind,
**gekennzeichnet durch** die Anordnung der optischen Gestaltung (5) auf einem Trägerwerkstoff (4),
der in mindestens eine auf dem tragenden Untergrund (2) angeordnete Lage (3) eines kalt verarbeitbaren, flüssigen Kunststoffes homogen integriert und eingebettet ist.

2. Mittel nach Anspruch 1, **dadurch gekennzeichnet, daß** der Trägerwerkstoff (4, 4a, 4b) für den kalt verarbeitbaren, flüssigen Kunststoff saugfähig ist.

3. Mittel nach Anspruch 1 und 2, **dadurch gekennzeichnet, daß** ein durchsichtiger, kalt verarbeitbarer Kunststoff mindestens als Deckschicht (6, 6b) den Trägerwerkstoff (4, 4a, 4b) mit der optischen Gestaltung (5, 5a, 5b) bedeckt.

4. Mittel nach Anspruch 1 bis 3, **dadurch gekennzeichnet, daß** der kalt verarbeitbare Kunststoff ein kalthärtendes Reaktionsharz ist, das im Temperaturbereich von -30° C bis +40° C ohne zusätzliche Energiezufuhr härtet.

5. Mittel nach mindestens einem der vorhergehenden Ansprüche, **dadurch gekennzeichnet, daß** das Reaktionsharz überwiegend auf Esthern der Metacryl- und/oder Acrylsäure und/oder auf Styrol aufgebaut ist.

6. Mittel nach mindestens einem der vorhergehenden Ansprüche, **dadurch gekennzeichnet, daß** der Trägerwerkstoff (4, 4a, 4b) mindestens ein Stück eines Gewebes oder eines Gewirkes und/oder eines Netzes und/oder einer Lochfolie und/oder einer Folie aus einem im Reaktionsharz anlösbarer Werkstoff und/oder einer saugfähigen Tapete ist.

7. Mittel nach mindestens einem der vorhergehenden Ansprüche, **dadurch gekennzeichnet, daß** der die optische Gestaltung (5a) aufweisende Trägerwerkstoff (4a) den tragenden Untergrund (2a) teilweise abdeckt.

8. Verfahren zum Herstellen und Gestalten einer Oberfläche auf einem tragenden Untergrund eines Gegenstandes, insbesondere eines Gebrauchs- oder Bedarfsgegenstandes, eines Bodens, einer Wand, eines Möbels oder dergleichen, wobei als optische Gestaltung ein Dekor, eine beliebige Darstellung einschließlich einer informativen Angabe und/oder einer werbetechnischen Aussage vorgesehen sind, **dadurch gekennzeichnet,**
**daß** zunächst eine erste Lage (3) eines kalt verarbeitbaren, flüssigen Kunststoffes auf den Untergrund (2) aufgetragen wird,
**daß** sodann ein Trägerwerkstoff (4) mit der optischen Gestaltung (5) auf die erste Lage (3) aufgelegt wird und
**daß** sodann eine Deckschicht (6) aufgetragen wird, wobei der Werkstoff der Deckschicht (6) und der Werkstoff der ersten Lage gleichartig sind.

9. Verfahren nach Anspruch 8, **dadurch gekennzeichnet, daß** eine Abdeckschicht/Versiegelung (10b) auf die erste Lage (3b) aufgetragen wird, daß sodann der Trägerwerkstoff (4b) mit der optischen Gestaltung (5b) auf die Abdeckschicht/Versiegelung (10b) aufgebracht wird und daß sodann eine Deckschicht (6b) beziehungsweise eine zweite Versiegelung mindestens auf den Trägerwerkstoff (4b) und die dort befindliche optische Gestaltung (5b) aufgetragen wird.

10. Verfahren nach mindestens einem der vorhergehenden Verfahrensansprüche, **gekennzeichnet durch** die Verwendung von Epoxidharzen (EP), von Methacrylatharzen (MMA), von ungesättigten Polyestherharzen (UP), von Vinylesterharzen (VE) beziehungsweise von Polyurethanharzen (PUR).
